# EUROPEAN PATENT SPECIFICATION

(11) **EP 0 742 224 B1**
(45) Date of publication and mention of the grant of the patent: **02.05.2002**
(21) Application number: 95906515.2
(22) Date of filing: 25.01.1995
(51) Int. Cl.: C07F 9/32, C09K 21/12, C08G 63/692, C08G 79/04, C07F 9/30, C08K 5/5313

(54) **PROCESS FOR PRODUCING ORGANOPHOSPHORUS ESTER COMPOUND AND REACTIVE FLAME RETARDANT**
VERFAHREN ZUR HERSTELLUNG EINES ORGANOPHOSPHORESTERS UND REAKTIVER FLAMMSCHUTZ
PROCEDE DE PRODUCTION D'UN COMPOSE D'ESTER ORGANOPHOSPHOREUX ET D'UN AGENT IGNIFUGE REACTIF

(30) Priority: 27.01.1994 JP 2606894
(43) Date of publication of application: 13.11.1996
(73) Proprietor: SANYO CHEMICAL INDUSTRIES, LTD., Kyoto-shi, Kyoto 605 (JP)
(72) Inventor: TANAKA, Keiji Sanyo Chemical Industries, Ltd., Kyoto-shi Kyoto 605 (JP); SATAKE, Munekazu Sanyo Chemical Industries, Ltd., Kyoto-shi Kyoto 605 (JP)
(74) Representative: Brehm, Hans-Peter
(86) International application number: PCT/JP95/00081
(87) International publication number: WO 95/20593

(56) References cited:
- EP-A- 0 423 746
- EP-A- 0 436 937
- JP-A- 3 151 395
- JP-A- 4 279 594
- JP-A- 5 194 562
- JP-A- 53 082 757
- US-A- 4 033 936
- US-A- 4 081 463
- US-A- 5 334 760

## Description

### FIELD OF INVENTION

The present invention relates to a process for producing organophosphorus ester compounds and to reactive flame retardants comprising said compounds. More particularly, the invention relates to a process for producing purified organophosphorus ester compounds which can be used as a bifunctional comonomer for imparting flame resistancy to polyester resin or as an intermediate thereof and to reactive flame retardants.

### BACKGROUND OF THE INVENTION

As reactive flame retardants for polyester resin and other purposes, organophosphorus ester compounds such as phosphinyl-carboxylic acid esters, ect. have heretofore been employed. Such organophosphorus ester compounds may contain alkylene glycols and other contaminants that can be used in polyesterification, but should have been purified to remove other impurities that would interfere with resin formation.

Conventionally, a phosphinyl-carboxylic acid derivative has been produced by the following reaction set forth in Zhural Obsh. khim. 37, 455-460, 1967 (C.A. 67, 32744 v).

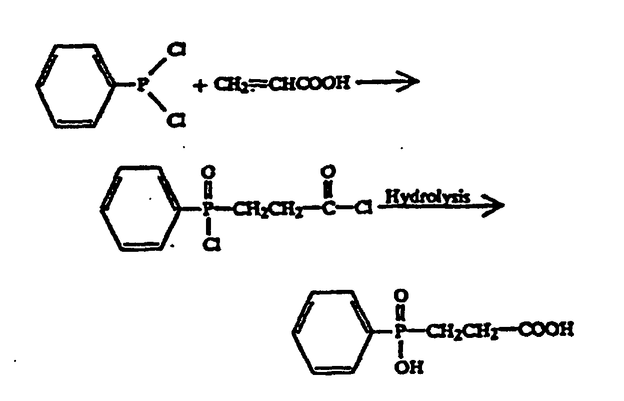

In this method using no catalyst, however, the reaction takes a long period of time (about 15 days at room temperature) and the yield is as low as about 71 %. Thus, this method is not suitable for industrial application.

To overcome such defects, the document US-A-4,081,463 proposes the use of an excessive amount of acrylic acid to improve the yield. In more detail, this document discloses that a greatly increased yield of 2-carboxyethyl(phenyl)phosphinic acid is obtained when a very specific ratio of reactants, that is 25 to 45 % molar excess of acrylic acid with respect to dichloro(-phenyl)phosphine, is used. This has been found to result in the formation of three intermediates, III-V, according to the general reaction shown below.

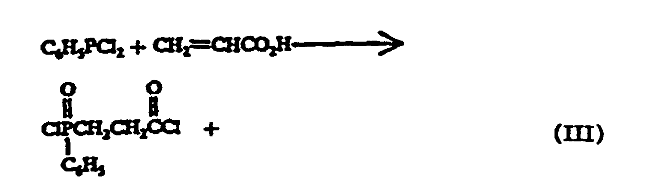

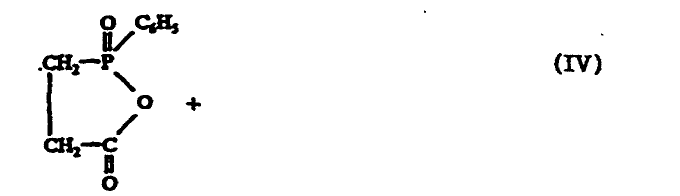

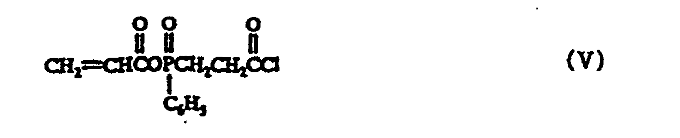

The proportions of the three intermediates vary with reaction conditions. The specific range of reactant proportions is critical, and it has been found that a quite different reaction product mixture results when only equivalent proportions of reactants are used. The conditions for the reaction are the use of a temperature of about 80° to 150°C, a preferred range being from 90° to 120°C. No catalyst is necessary for the reaction, nor a solvent needed. However high boiling solvents such as toluene or monochlorobenzene may be used if desired. The second stage of reaction is the hydrolysis of the above mixture of intermediates, preferably with 5 to 15 molar excess of water at 0°C to 100°C.

The hydrolysis step causes substantial losses in the wanted product because a certain amount of 2-carboxyethyl(phenyl)phosphinic acid remains dissolved in the aqueous phase. Preparing the esters of 2-carboxyethyl(phenyl)phosphinic acid and purification thereof requires additional steps.

The document US-A-5,334,760 is related to a method of producing phosphinyl-carboxylic acid derivates, for example alkyl esters thereof. A second producing method as described in this document comprises the steps of:
- reacting a phosphine derivative of the following general formula (I): 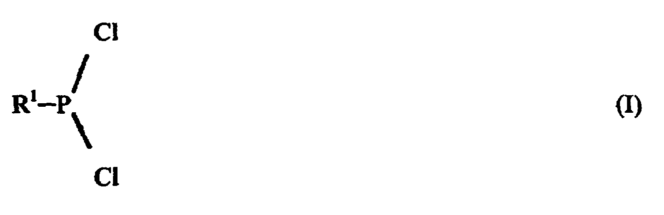 (wherein R¹ is an alkyl group having 1 to 18 carbon atoms or an aryl group having 6 to 18 carbon atoms, and the aryl group may have an alkyl group having 1 to 18 carbon atoms or an alkenyl group having 2 to 18 carbon atoms)
   with acrylic acid or methacrylic acid of the following general formula (II): 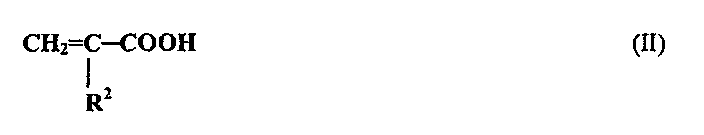 (wherein R² is a hydrogen atom or a methyl group)
   in the presence of a catalyst selected from the group consisting of an organic peroxide and an azo-compound; and
- reacting the resulting reaction product with a hydroxyl group-containing compound of the following general formula (IV):

   **R**^{**3**}**―OH** (IV)

   (wherein R³ is an alkyl group having 1 to 10 carbon atoms or an aryl group having 6 to 18 carbon atoms and the aryl group may contain an alkyl group having 1 to 18 carbon atoms or an alkenyl group having 2 to 18 carbon atoms),
   thereby to obtain a phosphinyl-carboxylic acid derivative in the form of ester represented by the following general formula (V): 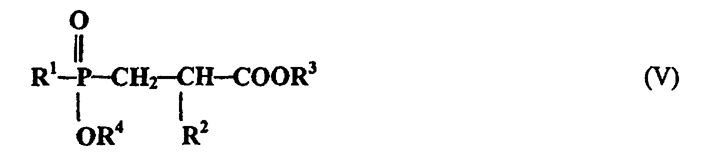 (wherein R¹, R² and R³ are as defined above R⁴ is a hydrogen atom, an alkyl group having 1 to 10 carbon atoms or an aryl group having 6 to 18 carbon atoms, and the aryl group may contain an alkyl group having 1 to 18 carbon atoms or an alkenyl group having 2 to 18 carbon atoms).

It is said, that the phosphinyl-carboxylic acid derivative in the form of ester of the general formula (V) can be reacted with high yield in a short period of time at a low temperature. The phosphinyl-carboxylic acid derivative (V) in the form of ester, can be used as a flame-retardant for polyester or a bi-functional reactive flame-retardant, or an intermediate thereof. Since the ester (V) is generally in the form of a liquid, the reaction can proceed while the gas of hydrogen chloride generated at esterification is distilled away under reduced pressure. This advantageously shortens or eliminates the subsequent water washing step and produces a product of high purity.

The inventors as denominated to the present application have repeated the fore-mentioned producing method and have found that the thus obtained 2-carboxyethyl(phenyl)phosphinic acid esters, for example the butyl ester may cause a discolouration (staining) of a polyester when using this ester as comonomer in an esterification step in order to obtain flame retardant polyester. This staining may be due to residual amount of catalysator and/or due to impurities remaining from the (phosphinic acid ester) forming step.

Especially, when a rinse-purified organophosphorous carboxylic acid compound is esterified and used as an reactive flame retardant for polyester resin, the polyester resin is stained black. The probable cause for this trouble is that the organophosphorus byproduct compound remaining in the rinse-purified organophosphorus carboxylic acid compound affects the esterification catalyst to stain the resin.

The purity of the rinse-purified compound can be increased by recrystallization. The check experiment performed by the inventors as denominated to the present application also affirmed a decreased organophosphorus byproduct content of the recrystallized compound. When a purified ester was produced from a recrystallization-purified organophosphorus carboxylic acid compound and used in the production of polyester resin, too, the problem of stained polyester resin could be overcome. However, addition of a recrystallization step results in commercial disadvantages such as lowered yield, prolonged production time, increased labor, and increased cost and, therefore, improvements are still desired.

The document US-A-4,033,936 is related to a process for the manufacture of flame retarding linear polyester. Accordingly, flame retarding linear polyesters are manufactured by reaction of dicarboxylic acids capable of forming high molecular weight linear polyesters of the esters thereof with lower aliphatic alcohols, with diols, and phosphorus compounds of the formula 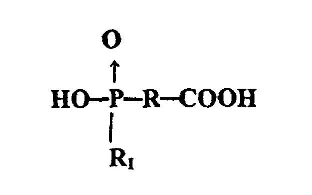 or the esters thereof with lower aliphatic alcohols or also the cyclic anhydrides thereof, the cyclic anhydrides are used after having been dissolved previously at elevated temperature in or the esters thereof with lower aliphatic alcohols or also the cyclic anhydrides thereof, the cyclic anhydrides are used after having been dissolved previously at elevated temperature in a diol suitable for the polyester manufacture, preferably in the diol used as main component. The symbols of the formula have the following meanings: R = saturated open-chain or cyclic alkylene, arylene or aralkylene, R₁ = alkyl having up to 6 carbon atoms, aryl or aralkyl; R was well as R₁ optionally containing 1 or more hetero atoms, preferably F, Cl, Br, O or S. By dissolving the cyclic carboxyphosphinic acid anhydrides in a diol before adding them to the polyester manufacturing batch the formerly necessary comminution of the hydroscopic cyclic anhydrides with absolute exclusion of moisture may be omitted, and furthermore it is possible to expose the anhydrides to the elevated polycondensation temperatures for a short time only.

This document is silent about the purity of the phosphorus compounds and/or about the manufacturing and purification process thereof in order to obtain such phosphorus compounds which will not cause a staining of the finally obtained polyester.

### TECHNICAL PROBLEM

Starting from the fore-mentioned prior art, especially from the teaching of US-A-5,334,760, it is the technical problem of the present invention to provide a process of manufacturing an organophosphorus ester compound suited to be incorporated as comonomer in a conventional polyester forming process to obtain a flame retardant polyester, which manufacturing process is conducted in the absence of a catalysator and provides in a high yield an organophosphorus ester compound comprising such a high purity that staining of the finally obtained flame retardant polyester is avoided during the subsequent polyester forming process.

Further, the present invention is related to a reactive flame retardant comprising a purified organophosphorous ester compound as obtained by said process.

### SUMMARY OF THE INVENTION

The present invention provides the following production processes [1] and [2] for organophosphorus ester compounds and the following reactive flame retardants [3] and [4].

### [1] Process for producing an organophosphorous ester compound

A process for producing an organophosphorus ester compound,
characterized in that
(1) a reaction mixture (M1) available on reaction of a dichlorophosphine derivative (a) of the following general formula (1):

   **R**^{**1**}**PCl**_{**2**} (1)

   wherein R¹ represents a hydrocarbon group having 1 to 18 carbon atoms with (meth)acrylic acid (b) in a molar ratio (a) : (b) of from 1: 1.1 to 1 : 1.5 and conducted in the absence of a catalyst is esterified with a monool (c) having 1 to 4 carbon atoms, and
(2) the resulting reaction mixture (M2) is neutralized with an alkali metal hydroxide or alkaline earth metal hydroxide (d) either in a solid form or in the form of an aqueous solution, wherein (d) is used in an amount corresponding to an equivalent ratio of [hydrochloric acid in (M2) + unreacted (b) in (M2)]/(d) in a range of 1/(0.8 to 1), and purified to provide
(3) a purified organophosphorus alkyl ester compound (A) of the following general formula (2) 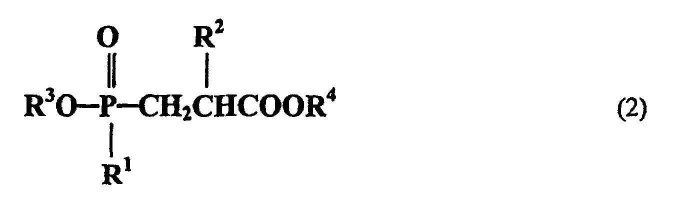 wherein
   - R¹: represents a hydrocarbon group having 1 to 18 carbon atoms;
   - R²: represents hydrogen or a methyl group;
   - R³: represents hydrogen or an alkyl group having 1 to 4 carbon atoms;
   - R⁴: represents an alkyl group having 1 to 4 carbon atoms.

### [2] Process for producing an organophosphorus ester compound

### [2] Process for producing an organophosphorus ester compound

A process for producing an organophosphorus ester compound
characterized in that
(1) a reaction mixture (M1) available on reaction of a dichlorophosphine derivative (a) of the following general formula (1);

   **R**^{**1**}**PCl**_{**2**} (1)

   wherein R¹ represents a hydrocarbon group having 1 to 18 carbon atoms with (meth)acrylic acid (b) in a molar ratio (a) : (b) of from 1: 1.1 to 1 : 1.5 and conducted in the absence of a catalyst is esterified with a monool (c) having 1 to 4 carbon atoms, and
(2) the resulting reaction mixture (M2) is neutralized with an alkali metal hydroxide or alkaline earth metal hydroxide (d) either in a solid form or in the form of an aqueous solution, wherein (d) is used in an amount corresponding to an equivalent ratio of [hydrochloric acid in (M2) + unreacted (b) in (M2)]/(d) in a range of 1/(0.8 to 1), and purified to provide
(3) a purified organophosphorus alkyl ester compound (A) of the following general formula (2) 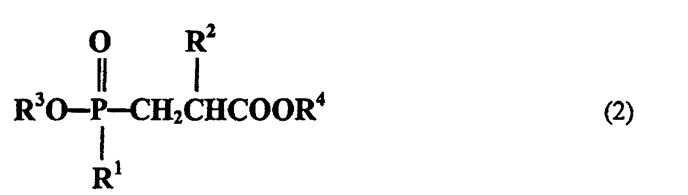 wherein
   - R¹: represents a hydrocarbon group having 1 to 18 carbon atoms;
   - R²: represents hydrogen or a methyl group;
   - R³: represents hydrogen or an alkyl group having 1 to 4 carbon atoms;
   - R⁴: represents an alkyl group having I to 4 carbon atoms;
(4) the purified organophosphorus alkyl ester compound (A) is subjected to a transesterification reaction with an alkylene glycol (e) having 2 to 4 carbon atoms to provide
(5) a purified organophosphorus hydroxyalkyl ester compound (B) of the following general formula (3) or a solution thereof in alkylene glycol (e) 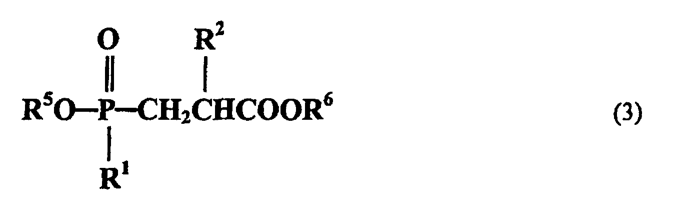 wherein
   - R¹: represents a hydrocarbon group having 1 to 18 carbon atoms;
   - R²: represents hydrogen or a methyl group;
   - R⁵: represents hydrogen or a hydroxyalkyl group having 2 to 4 carbon atoms;
   - R⁶: represents a hydroxyalkyl group having 2 to 4 carbon atoms.

### [3] Reactive flame retardant

A reactive flame retardant
comprising
a purified organophosphorus alkyl ester compound (A) obtained by the process according to claim 1,
said (A) being a mixture of
(A1) a monoalkyl ester compound of general formula (2) wherein R³ represents hydrogen and
(A2) a dialkyl ester compound of general formula (2) wherein R³ represents an alkyl group having 1 to 4 carbon atoms and
wherein the molar ratio of (A1) to (A2) is in the range of from 40 : 60 to 99 : 1.

### [4] Reactive flame retardant

A reactive flame retardant
comprising
a purified organophosphorus hydroxyalkyl ester compound (B) or a solution thereof in an alkylene glycol (e), as obtained by the process according to claim 2,
said (B) being a mixture of
(B1) a monohydroxyalkyl ester compound of general formula (3) wherein R⁵ represents hydrogen and
(B2) a dihydroxyalkyl ester compound of general formula (3) wherein R⁵ represents a hydroxyalkyl group having 2 to 4 carbon atoms, and wherein the molar ratio of (B1) to (B2) is in the range of from 40 : 60 to 99 : 1.

The present invention comprising the above-mentioned four aspects [1] to [4] has emerged from the results of the inventors' assiduous research work to solve the fore-mentioned technical problem. The results may be summarized in the following items (I) to (VI).
(I) When an alkyl ester is directly produced and purified from the reaction mixture following the reaction among a dichlorophosphine derivative, (meth)acrylic acid and monool, this alkyl ester is in liquid form and can be easily purified by alkali neutralization.
(II) Transesterification of the purified alkyl ester with an alkylene glycol readily yields a purified hydroxyalkyl ester with a minimum of impurity other than the starting alkylene glycol. The alkylene glycol not only functions as a solvent for the purified alkyl ester but can be utilized as part of a polyester production charge and, therefore, need not necessarily be removed.
(III) The purified alkyl ester and the purified hydroxyalkyl ester and the alkylene glycol solution thereof can each be used advantageously as a reactive flame retardant for polyester resin and other purposes or as an intermediate thereof; viz.
(IV) Unlike the conventional purified ester obtainable following water rinse of the solid product and subsequent recrystallization, the above purified alkyl ester according to the present invention is a compound made available in high yield by an expedient purification procedure comprising either phase separation of a liquid product or filtration. None of the less, the use of the purified alkyl ester as well as of the purified hydroxyalkyl ester and alkylene glycol solution thereof in the production of polyester resin does not cause any appreciable coloration in course of the subsequent polyester forming process.
(V) The reason for this freedom from resin coloration is probably attributable to a major difference in the residual amount of phosphorus-containing byproducts between the conventional purification procedure involving aqueous rinse of a solid compound and the purification according to the present invention which comprises neutralization and purification of a liquid compound. In addition, the reaction of the dichlorophosphine derivative (1) with (meth)acrylic acid (2) has been performed in absence of a catalysator thus avoiding any harmful catalysator residues.

Each of the alkyl ester and hydroxyalkyl ester is invariably a mixture of monoester and diester. As far as the monoester is concerned, there is an apprehension about the difference in the polyesterification reactivity with respect to two kinds of functional groups (alcoholic OH and OH bound to the P atom) but even the use of a mixture of monoester and diester allows the polyesterification reaction to proceed smoothly.

### DETAILED DESCRIPTION

The process according to the first aspect [1] of the present invention comprises reacting a dichlorophosphine derivative (a) of general formula (1) with (meth)acrylic acid (b), in a given molar ratio (a) : (b) of from 1 : 1.1 to 1:1.5 and in absence of a catalysator, and esterifiying the reaction mixture, and purifying the esterification mixture to provide a purified organophosphorus alkyl ester compound (A) of general formula (2).

Referring to general formula (1), the hydrocarbon group having 1 to 18 carbon atoms R¹ includes but is not limited to an alkyl group having 1 to 18 carbon atoms and an aryl group having 6 to 18 carbon atoms. The alkyl group having 1 to 18 carbon atoms includes methyl, ethyl, propyl, butyl, octyl, dodecyl, and octadecyl, among others.

The aryl group having 6 to 18 carbon atoms includes phenyl, nonylphenyl, and dodecylphenyl, among others.

Preferred examples of R¹ are aryl group having 6 to 18 carbon atoms, with phenyl being most preferred.

(Meth)acrylic acid means acrylic acid or methacrylic acid.

The reaction between dichlorophosphine derivative (a) and (meth)acrylic acid (b) is conducted in the absence of a catalyst because the reaction proceeds with good yield even without use of a catalyst. The components (a) and (b) are reacted in a molar ratio (a):(b) of from 1:1.01 to 1:1.5 and preferably in a molar ratio (a):(b) of from 1:1.25 to 1:1.45.

In conducting the reaction between (a) and (b), it is optional to add (b) to (a) or (a) to (b), or even use a mixture of (a) and (b), but preferably (b) is added to (a).

The reaction temperature is generally 80 to 150 °C and preferably 90 to 120 °C. The reaction time is generally 1 to 3 hours.

The resulting reaction mixture (M1) is considered to comprise the three kinds of product compounds represented by the following general formulas (4) to (6) and the unreacted residue of (meth)acrylic acid (b).

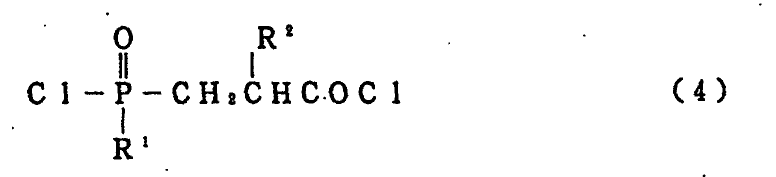

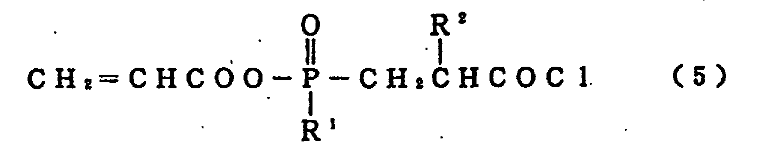

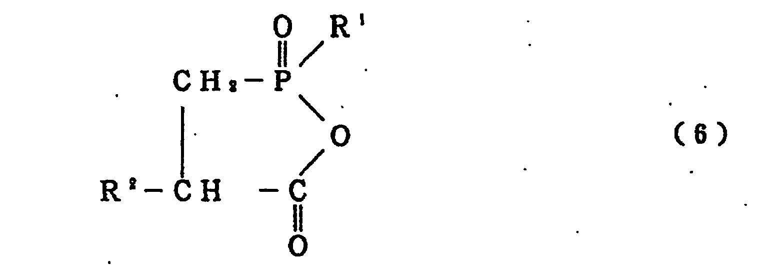

In each of the above formulas, R¹ represents a hydrocarbon group having 1 to 18 carbon atoms; and R² represents hydrogen or a methyl group.

The above reaction mixture (M1) is esterified with a monool (c) having 1 to 4 carbon atoms to give a reaction mixture (M2). (M1) and (c) are generally reacted at 0 to 150°C for 1 to 5 hours.

The monool having 1 to 4 carbon atoms (c) includes methanol, ethanol, n-propanol, i-propyl alcohol, n-butanol, t-butanol, etc. Among these monools, methanol or ethanol is preferred in view of the ease of removal after transesterification with an alkylene glycol. The amount of (c) for use with respect to (a) is generally not less than 2 molar equivalents and preferably in a range of 2 to 4 molar equivalents.

The reaction mixture (M2) contains the organophosphorus alkyl ester compound (A). This organophosphorus alkyl ester compound (A) in (M2) usually occurs as a mixture of the following monoalkyl ester compound (A1) and dialkyl ester compound (A2). The molar ratio of (A1) to (A2) in (M2) is generally in a range of 40:60 to 99:1.
(A1) The monoalkyl ester compound of general formula (2) wherein R³ is hydrogen
(A2) The dialkyl ester compound of general formula (2) wherein R³ is an alkyl group having 1 to 4 carbon atoms.

Taking phenyl as an example of R¹, the monoalkyl ester compound (A1) includes the monoesters of 3-[hydroxy(phenyl)phosphinyl]propionic acid with said monools such as methanol, ethanol, n-propanol, i-propyl alcohol, n-butanol, and t-butanol, typically methyl 3-[hydroxy(phenyl)phosphinyl]propionate, ethyl 3-[hydroxy(phenyl)phosphinyl]propionate, and so on.

Other specific examples of (A1) include the monoester compounds corresponding to those mentioned above in which an alkyl group having 1 to 18 carbon atoms or an aryl group having 6 to 18 carbon atoms (other than phenyl) has been substituted for said phenyl group.

Taking phenyl again as an example of R¹, the dialkyl ester compound (A2) includes the diesters of 3-[hydroxy(phenyl)phosphinyl]propionic acid with said monools such as methanol, ethanol, n-propanol, i-propyl alcohol, n-butanol, and t-butanol, typically methyl 3-[methoxy(phenyl)phosphinyl]propionate, ethyl 3-[ethoxy(phenyl)phosphinyl]propionate, and so on.

Other specific examples of (A2) include the diester compounds corresponding to the compounds mentioned just above in which an alkyl group having 1 to 18 carbon atoms or an aryl group having 6 to 18 carbon atoms (other than phenyl) has been substituted for said phenyl group.

The reaction mixture (M2) is neutralized with an alkali metal hydroxide or alkaline earth metal hydroxide (d) either in solid form or in the form of an aqueous solution, and then purified to provide a purified compound (A). As examples of (d), sodium hydroxide, potassium hydroxide, magnesium hydroxide, calcium hydroxide, etc. can be mentioned, although alkali metal hydroxides are preferred.

When the reaction mixture (M2) is to be neutralized with a solid form of (d), (M2) is mixed with solid (d) and the precipitated salt is harvested by filtration.

When (d) is used in the form of an aqueous solution, an aqueous solution of (d) is mixed with (M2) and, then, the mixture is purified by phase separation. The use of an aqueous solution of (d) is preferred in view of the relative ease of purification.

The amount of (d) is selected thus that an equivalent ratio of [hydrochloric acid in (M2) + unreacted (b) in (M2)]/(d) is in a range of 1/(0.8 to 1) and preferably in a range of 1/(0.95 to 1). If the proportion of (d) exceeds the above range, the yield will be lowered, while the use of (d) in a proportion below said range results in decreased purity.

The purified product of (A) which can be obtained by the process [1] of the invention is usually a mixture of (A1) and (A2) in a molar ratio of 40:60 through 99:1.

This purified product of (A) is lean in the byproduct phosphinic acid derivative originating from the starting dichlorophosphine derivative (for example, phenylphosphinic acid is byproduced when the starting material is dichlorophenylphosphine). Thus, in the process [1] of the present invention, the molar ratio of (A) to said byproduct phosphinic acid derivative can be increased generally to ≧ 99.85 : ≦ 0.15 and preferably to ≧ 99.9 : ≦ 0.10.

Since the byproduct phosphinic acid derivative has been removed to the above level, the purified product of (A) obtained by process [1] and the purified product of (B) or alkylene glycol (e) solution thereof as obtained by process [2] using the purified product of (A) as an intermediate starting material present only a low risk of resin staining when used in the subsequent polyester forming process.

As far as the process [1] according to the present invention, avoids an excessive loss of the intended product in the course of a phase separation step or in course of a filtration step, the yield of the purified product (A) is usually at a high level of not less than 95%.

Process [2] of the present invention is the process in which the purified product of (A) obtained by process [1] is subjected to transesterification reaction with an alkylene glycol (e) having 2 to 4 carbon atoms to provide a purified organophosphorus hydroxyalkyl ester (B) or a solution thereof in the alkylene glycol (e).

Suited alkylene glycols having 2 to 4 carbon atoms include ethylene glycol, propylene glycol and butylene glycol, but ethylene glycol is preferred in view of its availability and usability of the (e) solution in the polyester subsequent forming process without removal of the unreacted starting material.

The amount of (e) for use in the transesterification reaction with respect to (A) is generally 1 to 20 molar equivalents and preferably 2 to 10 molar equivalents. Depending on the proportion of (e) in relation to (A), either a purified product of (B) or a solution thereof in the alkylene glycol (e) is obtained and, in the case of the latter, the concentration of the the solution is variable.

Where necessary, a catalyst may be added for promoting the transesterification reaction between (A) and (e). The catalyst that can be used includes tin series catalysts such as dibutyltin oxide etc., acid catalysts such as hydrochloric acid, sulfuric acid, heteropolyacids, etc., amine catalysts such as triethylamine, diazabicycloundecene, etc., or mixtures thereof. Preferred are tin series catalysts. The amount of the catalyst with respect to (A) is generally 5 weight % or less and preferably 0.01 to 5 weight %.

The transesterification reaction temperature is generally 50 to 220 °C and preferably 60 to 150 °C. The reaction can be carried out at superatmospheric, atmospheric or subatmospheric pressure. The reaction end-point may be determined by gas chromatographic analysis. Following the reaction, an excess of (e) may be removed by a routine procedure to provide a purified product of (B). The (e) containing solution in may also be directly used as a reactive flame retardant.

(B) may form a mixture of the following monohydroxyalkyl ester compound (B1) and dihydroxyalkyl ester compound (B2).
(B1) corresponds to the monohydroxyalkyl ester compound of general formula (3) wherein R⁵ represents hydrogen. (B2) corresponds to the dihydroxyalkyl ester compound of general formula (3) wherein R⁵ represents a hydroxyalkyl group having 2 to 4 carbon atoms.

Representative examples of (B1) include hydroxyethyl, hydroxypropyl and hydroxybutyl esters of 3-[hydroxy(phenyl)phosphinyl]propionic acid. In addition, those compounds may be mentioned which have been derived from (A1) by replacing the alkyl group of the monoalkyl ester (A1) by a hydroxyalkyl group such as those mentioned just above.

Representative examples of (B2), include hydroxyethyl-3-[hydroxyethoxy(phenyl)phosphinyl]propionate, hydroxypropyl-3-[hydroxypropoxy(phenyl)phosphinyl]propionate, and hydroxybutyl-3-[hydroxybutoxy(phenyl)phosphinyl]propinate In addition, those compounds may be mentioned which have been derived from (A2) di-esterification with ethylene glycol, propylene glycol or butylene glycol.

The organophosphorus hydroxyalkyl ester compound (B) produced by process [2] is a mixture of (B1) and (B2) in a molar ratio of from 40:60 to 99:1.

The reactive flame retardant according to the aspect [3] of the present invention is a reactive flame retardant comprising a purified organophosphorus alkyl ester compound (A) as obtained by the process [1] of the present invention, said (A) being a mixture of monoalkyl ester compound (A1) and dialkyl ester compound (A2).

The reactive flame retardant according to the aspect [4] of the present invention is a reactive flame retardant comprising a purified organophosphorus hydroxyalkyl ester compound (B) or a solution thereof in an alkylene glycol as obtained by the process [2] of the present invention, said (B) being a mixture of monohydroxyalkyl ester compound (B1) and dihydroxyalkyl ester compound (B2) in a molar ratio of from 40:60 to 99:1.

The reactive flame retardant [3] is an alkyl ester and contrary the reactive flame retardant [4] forming a hydroxyalkyl ester.

When the alkyl ester is used as part of the charge for polyester production, it is built into the polyester as the transesterification and polyesterification reactions are properly conducted. Therefore, the reactive flame retardant [3] according to the present invention may be used not only as a synthetic intermediate for the preparation of the reactive flame retardant [4] according to the present invention, but also as a reactive flame retardant for polyester resin just as the reactive flame retardant [4].

The reactive flame retardant [4] according to the present invention comprises a molar ratio (B1):
(B2) of from 40:60 to 99:1 and preferably a molar ratio of from 50:50 to 97:3.

The reactive flame retardants [3] and [4] according to the present invention may contain said alkylene glycol (e). The concentration of (e) is not so critical and may be chosen from a range taking into consideration the amount of the alcohol component required for the production of a polyester.

The component (e) serves not only as a diluent (solvent) for the phosphorus-containing compounds (A) and (B) but also as a polyester forming component.

Each of the reactive flame retardants [3] and [4] according to the the present invention form a valuabe comonomer unit for the manufacturing of flame retarded polyester resins which may be used for various applications such as - for example - polyester fiber, polyester film, unsaturated polyester molding compounds and alkyd coatings.

Thus, in producing a polyester by copolymerizing an acid component such as dimethyl terephthalate with an alcohol component such as ethylene glycol, a flame-retarded polyester may be obtained by using the reactive flame retardant according to aspect [3] and/or aspect [4] of the invention as a component of the charge of the polyester forming process.

The proportion of the reactive flame retardant [3] or [4] of the present invention in terms of atomic phosphorus relative to the polyester resin is generally of from 0.1 to 5 % by weight and preferably of from 0.3 to 2.5 % by weight. If the proportion is less than 0.1 % by weight, a sufficient flame retardancy cannot be obtained. If the upper limit of 5 % by weight is exceeded, the mechanical strength of the thus obtained polyester will be sacrificed.

With respect to the technology for manufacturing flame-retardant polyester resin, e.g. for the production of flame retardant polyester fibers, reference may be made to the process as described in the fore-mentioned document US-A-4,033,936, howerver with the variation that the reactive flame retardant [3] or [4] according to the present invention is used in lieu of the phosphinic acid derivative used in the process of the above-mentioned patent.

### EXAMPLES

The following examples describe the present invention in further detail and should by no means be interpretated as defining the scope of the invention.

### Example 1:

① A 200 ml-glass reaction vessel equipped with a stirrer was charged with 35.80 g dichlorophenylphosphine. Then, 20.90 g acrylic acid were added dropwise over 30 minutes at 90 to 110 °C to provide a reaction mixture (M1-1). To this reaction mixture (M1-1) were added 16.34 g methanol dropwise at 20 °C, and the mixture was refluxed at 60 °C for 3 hours. The excess methanol and excess acrylic acid were then distilled off at 85 °C and 10 mmHg to provide a reaction mixture (M2-1).
② The above reaction mixture (M2-1) was washed with 15% aqueous sodium hydroxide solution, using the latter in a volume corresponding to one equivalent with respect to the residual amounts of acrylic acid, byproduct hydrochloric acid, and byproduct phenylphosphinic acid in the reaction mixture (M2-1) and allowed to stand for phase separation.
③ Following this purification, 47.06 g product are obtained consisting of a purified mixture (A-1a) of the following compounds (A1-1) and (A2-1), wherein
   (A1-1) is methyl-3-[hydroxy(phenyl)phosphinyl]propionate and
   (A2-1) is methyl-3-[methoxy(phenyl)phosphinyl]propionate.

This purified mixture (A-1a) was analyzed by ¹H-NMR and ¹³C-NMR spectrometry. As determined from the area ratios of the respective signals of the ¹H-NMR spectrum, the molar ratio of (Al-1)/(A2-1)/byproduct phenylphosphinic acid was 49.97/49.95/0.08. All the other components were traces below the detection limit. Moreover, as calculated from the area ratio of the respective signals of the ¹H-NMR spectrum, the reaction rate based on the starting dichlorophenylphosphine was 97.0%.

### Example 2:

Essentially, the procedure of Example 1 was repeated but unit the variation that 37.76 g n-butanol were used in lieu of 16.34 g of methanol, and the reflux temperature was maintained at 130 °C. The thus obtained product comprises 59.67 g of a purified mixture (A-2) of the following compounds (A1-2) and (A2-2), wherein
(A1-2) is butyl-3-[hydroxy(phenyl)phosphinyl]propionate and
(A2-2) is butyl-3-[butoxy(phenyl)phosphinyl]propionate.

This purified mixture (A-2) was analyzed by the same . method as in Example 1. The molar ratio of (A1-2) to (A2-2) was approximately 1:1. The reaction rate, also determined as in Example 1, was 97.0%.

### Example 3:

A 200 ml-glass reaction vessel equipped with a stirrer was charged with 47.06 g of the purified mixture (A-1a) as obtained in Example 1 and with 74.64 g ethylene glycol; the temperature of the reaction mixture was increased gradually from room temperature to 100 °C under constant agitation at a reduced pressure of 20 mmHg. During further stirring of the mixture at 100 to 105 °C for 2.5 hours, the byproduct methanol was removed from the system. This transesterification reaction yielded 112.10 g of an ethylene glycol solution containing a mixture (B-1a) of the following compounds (B1-1) and (B2-1), wherein
(B1-1) is hydroxyethyl-3-[hydroxy(phenyl)phosphinyl]propionate, and
(B2-1) is hydroxyethyl-3-[hydroxyethoxy(phenyl)phosphinyl]-propionate.

(B1-1) and (B2-1) in the above mixture (B-1a) were indentified by ¹H-NMR and ¹³C-NMR spectrometry. From the area ratio of the respective signals of the ¹H-NMR spectrum, the molar ratio of (B1-1) to (B2-1) was determined to approximately 1:1. As calculated from the area ratio of the signals on the ¹H-NMR, the reaction rate based on the starting mixture (A-1a) was 98.0%.

### Example 4 :

Essentially, the procedure of Example 3 was repeated but with the variation that 59.67 g of the purified mixture (A-2) as obtained in Example 2 was used. The thus obtained product comprise 112.10 g of an ethylene glycol solution containing a mixture (B-2) of the following compounds (B1-2) and (B2-2) wherein
(B1-2) is hydroxyethyl-3-[hydroxy(phenyl)phosphinyl]propionate, and
(B2-2) is hydroxyethyl-3-[hydroxyethoxy(phenyl)phosphinyl]-propionate.

(B1-2) and (B2-2) in the above mixture (B-2) were identified according to Example 3 and it was also confirmed that (B1-2) and (B2-2) were present in a molar ratio of approximately 1:1. The reaction rate based on the starting mixture (A-2) was 97.0%.

### Example 5 :

Essentially, the procedure of Example 1 was repeated but with the variation that methanol was added at 40 °C instead of 20°C. The thus obtained product comprises 45.8 g of a purified mixture (A-1b) of (A1-1) and (A2-1).

(A1-1) and (A2-1) in the above purified mixture (A-1b) were identified by ¹H-NMR and ¹³C-NMR spectrometry. From the area ratio of the respective signals of the ¹H-NMR spectrum, it was confirmed that (A1-1) and (A2-1) had formed in a molar ratio of approximately 8:2. Based on the area ratio of the respective signals of the ¹H-NMR spectrum, the reaction rate was calculated to 97.0% relative to the starting dichlorophenylphosphine.

### Example 6 :

Essentially, the procedure of Example 3 was repeated with the variation that the purified mixture (A-1b) as obtained in Example 5 was used in lieu of the purified mixture (A-1a) as obtained in Example 1. The thus obtained product comprises 111.10 g of an ethylene glycol solution containing a purified mixture (B-1b) of (B1-1) and (B2-1).

(B1-1) and (B2-1) in the above purified mixture (B-1b) were identified by ¹H-NMR and ¹³C-NMR spectrometry, and from the area ratio of the respective signals of the ¹H-NMR spectrum, it was confirmed that (B1-1) and (B2-1) were present in a molar ratio of approximately 8:2. The reaction rate calculated from the area ratio of the respective signals on the ¹H-NMR spectrum was 98.5% based on the starting mixture (A-1b).

### Comparative Example 1:

Essentially, the procedure of Example 1 was repeated but with the variation that 9.18 g water were used in lieu of 16.34 g methanol. However, in the purification step using aqueous sodium hydroxide solution, the mixture became a homogeneous system which prevented phase separation.

### Comparative Example 2:

A rinse-purified 3-[hydroxy(phenyl)phosphinyl]propionic acid was prepared by reacting 501.2 g of dichlorophenylphosphine, 3.2 g of t-butyl peroxybenzoate, 201.8 g of acrylic acid, and 0.92 L of water. According to the procedure as described in the fore-mentioned document US-A-5,334,760, this preparation process comprise steps of hydrolyzing the reaction mixture after completion of the reaction, cooling, harvesting the resulting crystals by filtration, rinsing the crystal crop with water, and drying. The yield was 564.9 g or 94.2%. From the area ratio of the respective signals of the ¹H-NHR spectrum, the molar. ratio of 3-[hydroxy(phenyl)phosphinyl]propionic acid to phenylphosphinic acid was found to be 99.10:0.9. The other components were traces below the detection limit.

### Comparative Example 3:

149.8 g of the rinse-purified 3-[hydroxy(phenyl)phosphinyl]propionic acid as obtained in Comparative Example 2 were dissolved in 500 ml water at 80 °C to prepare an aqueous solution. This aqueous solution was cooled to 10 °C, and the resulting crystals were harvested by filtration, rinsed with water, and dried in a vacuum dryer at 60 °C to provide 111.3 g of a recrystallization-purified 3-[hydroxy(phenyl) phosphinyl]propionic acid. The recrystallization yield was 74.3% and the yield based on the starting dichlorophenylphos phine was 94.2% (yield of rinse-purified product) × 74.3% (recrystallization yield) = 69.8%.

### Example 7 :

A reactor was charged with 40 parts terephthalic acid, 10 parts isophthalic acid, and 25 parts ethylene glycol, and a dehydrative esterification reaction was carried out at 220 °C and 0.5 kg/cm².

Then, 0.34 parts lithium acetate, 0.015 parts antimony trioxide, 0.005 parts phosphoric acid, and 13 parts of an ethylene glycol solution of the mixture (B-1a) as obtained in Example 3 were added, and the polymerization reaction was carried out at 260 °C in a vacuum of 2 mmHg for 2.5 hours to provide 63 parts of polyester resin (P-1).

This polyester resin (P-1) was colorless and transparent, had a Tg of 51 °C , and showed an intrinsic viscosity of 0.386 (20 °C ) when dissolved in 1,2-dichloroethane-phenol (1:1, w/w).

### Example 8 :

Essentially, the procedure of Example 7 was repeated, but with the variation that 10 parts of an ethylene glycol solution of mixture (B-1b) was used in lieu of 10 parts of an ethylene glycol solution of mixture (B-1a) to obtain 63 parts polyester resin (P-2). This polyester resin (P-2) was colorless and transparent, had a Tg of 53 °C , and an intrinsic viscosity of 0.371 (20 °C ).

### Comparative Example 4 :

A glass reaction vessel was charged with 49.92 g of the rinse-purified 3-[hydroxy(phenyl)phosphinyl]propionatic acid as obtained in Comparative Example 2, and with 74.64 g ethylene glycol, and the temperature was increased gradually. from room temperature to 100 °C in a vacuum of 20 mmHg, with constant stirring. Stirring of the mixture was further continued at 100 to 105 °C for 2.5 hours to carry out a esterification reaction with constant removal of water from the reaction system to obtain 102.80 g of an ethylene glycol solution of hydroxyethyl-3-[hydroxy(phenyl)phosphinyl]propionate.

Then, the procedure of Example 7 was essentially repeated, but with the variation that 13 parts of the above ethylene glycol solution of hydroxyethyl-3-[hydroxy(phenyl)phosphinyl]propionate were used in lieu of 13 parts of the ethylene glycol solution of mixture (B-1a), to obtain 63 parts of polyester resin (P-3). This polyester (P-3) was black and showed a Tg of 50°C .

### Reference Example 1:

Essentially, the procedure of Comparative Example 4 was repeated, but with the variation that the recrystallization-purified 3-[hydroxy(phenyl)phosphinyl]propionic acid as obtained in Comparative Example 3 was used in lieu of the rinse-purified 3-[hydroxy(phenyl)phosphinyl]propionic acid, to obtain 102.81 g of an ethylene glycol solution of hydroxyethyl-3-[hydroxy(phenyl)phosphinyl]propionate.

Then, the procedure of Example 7 was repeated, but using 13 parts of this ethylene glycol solution of hydroxyethyl-3-[hydroxy(phenyl)phosphinyl]propionate, to obtain 63 parts of polyester resin (P-4). This polyester resin (P-4) was colorless and transparent and showed a Tg of 52°C.

### INDUSTRIAL APPLICABILITY

As described above, purified organophosphorus ester compounds can be produced by the process of the present invention in an expedient manner and in high yield.
(1) In the process of the invention, an alkyl ester is directly produced from a reaction mixture after completion of the reaction between a dichlorophosphine derivative and (meth)acrylic acid and because this alkyl ester is a liquid, it can be easily purified by phase separation or filtration after alkali neutralization and the yield is high compared with purification by the rinse and recrystallization process. Thus, the process is commercially advantageous.
(2) Moreover, from the purified alkyl ester, a high-purity hydroxyalkyl ester or a solution thereof in the alkylene glycol, lean in contaminant compounds other than the starting alkylene glycol, can be easily produced by transesterification. Since the alkylene glycol can be utilized as part of the charge for polyester production, it need not necessarily be removed.
(3) These purified alkyl ester and hydroxyalkyl ester do not present the resin coloration problem, despite the fact that they are obtained by the expedient purification procedure, namely phase separation of a liquid compound or filtration.

The purified alkyl ester and the purified hydroxyalkyl ester and its alkylene glycol solution, which can be used as the reaction flame retardants of the present invention, are obtained by the process having the above-mentioned advantageous features (1) to (3). Moreover, each of said alkyl ester and hydroxyalkyl ester is a mixture of monoester and diester, but the polyesterification reaction can be-conducted smoothly even when the mixture is used as a comonomer unit of polyester resin.

Therefore, the reactive flame retardant comprising the purified organophosphorus ester compound or an alkylene glycol solution thereof as provided by the process of the present invention can be advantageously used as a comonomer for imparting flame retardancy to polyester resin.

Thus, when the reactive flame retardant of the invention is used as a comonomer unit for the production of polyester resin, not only high flame retardancy is imparted to the resin but a polyester resin of high molecular weight with a higher glass transition temperature (Tg) can be easily obtained.

## Claims

1. A process for producing an organophosphorus ester compound,
**characterized in that**
(1) a reaction mixture (M1) available on reaction of a dichlorophosphine derivative (a) of the following general formula (1):
**R**^{**1**}**PCl**_{**2**} (1)
wherein R¹ represents a hydrocarbon group having 1 to 18 carbon atoms with (meth)acrylic acid (b) in a molar ratio (a): (b) of from 1: 1.1 to 1: 1.5 and conducted in the absence of a catalyst is esterified with a monool (c) having I to 4 carbon atoms, and
(2) the resulting reaction mixture (M2) is neutralized with an alkali metal hydroxide or alkaline earth metal hydroxide (d) either in a solid form or in the form of an aqueous solution, wherein (d) is used in an amount corresponding to an equivalent ratio of [hydrochloric acid in (M2) + unreacted (b) in (M2)]/(d) in a range of 1/(0.8 to 1), and purified to provide
(3) a purified organophosphorus alkyl ester compound (A) of the following general formula (2) 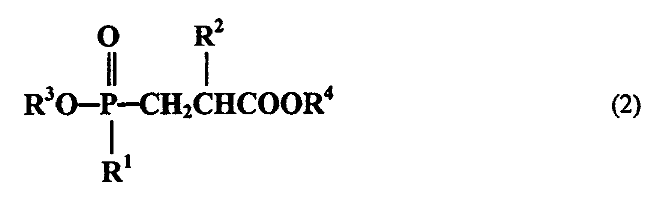 wherein
R¹ represents a hydrocarbon group having 1 to 18 carbon atoms;
R² represents hydrogen or a methyl group;
R³ represents hydrogen or an alkyl group having 1 to 4 carbon atoms;
R⁴ represents an alkyl group having 1 to 4 carbon atoms.

2. A process for producing an organophosphorus ester compound,
**characterized in that**
(1) a reaction mixture (M1) available on reaction of a dichlorophosphine derivative (a) of the following general formula (1);
**R**^{**1**}**PCl**_{**2**} (1)
wherein R¹ represents a hydrocarbon group having 1 to 18 carbon atoms with (meth)acrylic acid (b) in a molar ratio (a): (b) of from 1: 1.1 to 1 : 1.5 and conducted in the absence of a catalyst is esterified with a monool (c) having 1 to 4 carbon atoms, and
(2) the resulting reaction mixture (M2) is neutralized with an alkali metal hydroxide or alkaline earth metal hydroxide (d) either in a solid form or in the form of an aqueous solution, wherein (d) is used in an amount corresponding to an equivalent ratio of [hydrochloric acid in (M2) + unreacted (b) in (M2)]/(d) in a range of 1/(0.8 to 1), and purified to provide
(3) a purified organophosphorus alkyl ester compound (A) of the following general formula (2) 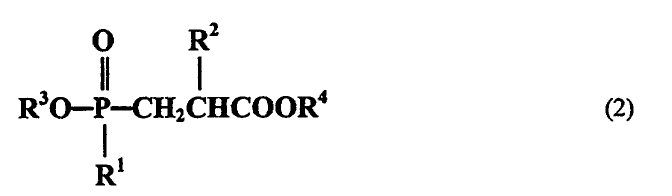 wherein
R¹ represents a hydrocarbon group having 1 to 18 carbon atoms;
R² represents hydrogen or a methyl group;
R³ represents hydrogen or an alkyl group having 1 to 4 carbon atoms;
R⁴ represents an alkyl group having 1 to 4 carbon atoms.
(4) the purified organophosphorus alkyl ester compound (A) is subjected to a transesterification reaction with an alkylene glycol (e) having 2 to 4 carbon atoms to provide
(5) a purified organophosphorus hydroxyalkyl ester compound (B) of the following general formula (3) or a solution thereof in alkylene glycol (e) 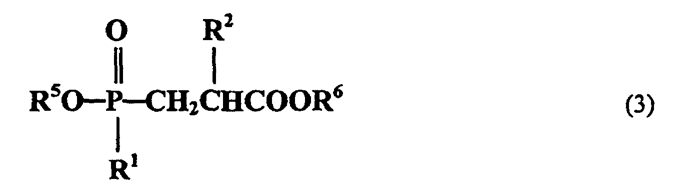 wherein
R¹ represents a hydrocarbon group having 1 to 18 carbon atoms;
R² represents hydrogen or a methyl group;
R⁵ represents hydrogen or a hydroxyalkyl group having 2 to 4 carbon atoms;
R⁶ represents a hydroxyalkyl group having 2 to 4 carbon atoms.

3. The process according to claim 1 or 2,
wherein
in step (1) a reaction mixture (M1) available on reaction of a dichlorophosphine derivative (a) of the following general formula (1):
**R**^{**1**}**PCl**_{**2**} (1)
wherein R¹ represents a hydrocarbon group having 1 to 18 carbon atoms with (meth)acrylic acid (b) in a molar ratio (a) : (b) of from 1: 1.25 to 1 : 1.45 and conducted in the absence of a catalyst is esterified with a monool (c) having 1 to 4 carbon atoms.

4. A reactive flame retardant
comprising
a purified organaphosphorus alkyl ester compound (A) obtained by the process according to claim 1,
said (A) being a mixture of
(A1) a monoalkyl ester compound of general formula (2) wherein R³ represents hydrogen and
(A2) a dialkyl ester compound of general formula (2) wherein R³ represents an alkyl group having 1 to 4 carbon atoms and
wherein the molar ratio of (A1) to (A2) is in the range of from 40 : 60 to 99:1.

5. The reactive flame retardant according to claim 4,
wherein
R¹ is an aryl group having 6 to 18 carbon atoms.

6. The reactive flame retardant according to claim 4,
fore use
as a comonomer unit in a polyester resin forming process.

7. A reactive flame retardant
comprising
a purified organophosphorus hydroxyalkyl ester compound (B) or a solution thereof in an alkylene glycol (e), as obtained by the process according to claim 2,
said (B) being a mixture of
(B1) a monohydroxyalkyl ester compound of general formula (3) wherein R⁵ represents hydrogen and
(B2) a dihydroxyalkyl ester compound of general formula (3) wherein R⁵ represents a hydroxyalkyl group having 2 to 4 carbon atoms, and
wherein the molar ratio of (B1) to (B2) is in the range of from 40 : 60 to 99: 1.

8. The reactive flame retardant according to claim 7,
wherein
R¹ is an aryl group having 6 to 18 carbon atoms.

9. The reactive flame retardant according to claim 7,
for use
as a comonomer unit in a polyester resin forming process.

## Patentansprüche

1. Verfahren zur Herstellung einer Organophosphor-Ester-Verbindung **gekennzeichnet durch** die Verfahrensschritte:
(1) Ein Reaktionsgemisch (M1), das **durch** eine
- in Abwesenheit eines Katalysators erfolgende - Umsetzung eines Dichlorphosphin-Derivates (a) der nachstehenden allgemeinen Formel (1),
**R**^{**1**}**PCl**_{**2**} (1)
wobei R¹ für eine C₁₋₁₈-Kohlenwasserstoffgruppe steht, mit (Meth)acrylsäure (b) in einem Molverhältnis (a) : (b) von 1 : 1,1 bis 1 : 1,5 erhältlich ist,
wird mit einem C₁₋₄-Monoalkohol (c) verestert;
(2) das dabei erhaltene Reaktionsgemisch (M2) wird mit einem, entweder in fester Form oder in Form einer wässrigen Lösung vorliegenden Alkalimetallhydroxid oder Erdalkalimetallhydroxid (d) neutralisiert, wobei (d) in einer Menge eingesetzt wird, die einem Äquivalent-Verhältnis [Salzsäure in (M2) + nicht umgesetztes (b) in (M2)] / (d) in einem Bereich von 1/(0,8 bis 1) entspricht, und das Neutralisierungsprodukt wird gereinigt; um
(3) eine gereinigte Organophosphor-Alkylester-Verbindung (A) der nachstehenden allgemeinen Formel (2) bereitzustellen, 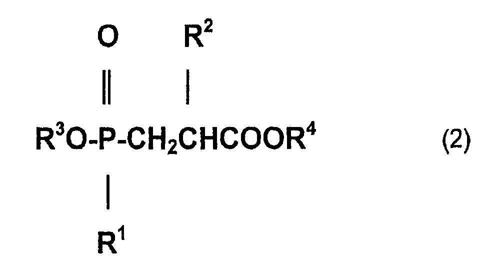 wobei
R¹ steht für eine C₁₋₁₈-Kohlenwasserstoffgruppe,
R² steht für Wasserstoff oder für eine Methylgruppe,
R³ steht für Wasserstoff oder für eine C₁₋₄-Alkylgruppe,
R⁴ steht für eine C₁₋₄-Alkylgruppe.

2. Verfahren zur Herstellung einer Organophosphor-Ester-Verbindung **gekennzeichnet durch** die Verfahrensschritte:
(1) Ein Reaktionsgemisch (M1), das **durch** eine
- in Abwesenheit eines Katalysators erfolgende - Umsetzung eines Dichlorphosphin-Derivates (a) der nachstehenden allgemeinen Formel (1),
**R**^{**1**}**PCl**_{**2**} (1)
wobei R¹ für eine C₁₋₁₈-Kohlenwasserstoffgruppe steht, mit (Meth)acrylsäure (b) in einem Molverhältnis (a) : (b) von 1 : 1,1 bis 1 : 1,5 erhältlich ist,
wird mit einem C₁₋₄-Monoalkohol (c) verestert;
(2) das dabei erhaltene Reaktionsgemisch (M2) wird mit einem, entweder in fester Form oder in Form einer wässrigen Lösung vorliegenden Alkalimetallhydroxid oder Erdalkalimetallhydroxid (d) neutralisiert, wobei (d) in einer Menge eingesetzt wird, die einem Äquivalent-Verhältnis [Salzsäure in (M2) + nicht umgesetztes (b) in (M2)] / (d) in einem Bereich von 1/(0,8 bis 1) entspricht, und das Neutralisierungsprodukt wird gereinigt; um
(3) eine gereinigte Organophosphor-Alkylester-Verbindung (A) der nachstehenden allgemeinen Formel 1(2) bereitzustellen, 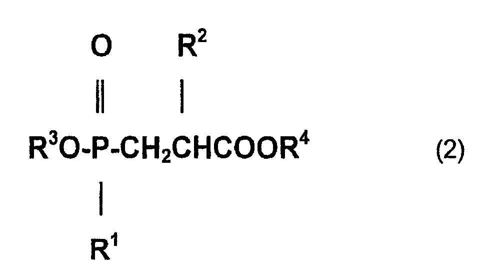 wobei
R¹ steht für eine C₁₋₁₈-Kohlenwasserstoffgruppe,
R² steht für Wasserstoff oder für eine Methylgruppe,
R³ steht für Wasserstoff oder für eine C₁₋₄-Alkylgruppe,
R⁴ steht für eine C₁₋₄-Alkylgruppe;
(4) die gereinigte Organophosphor-Alkylester-Verbindung (A) wird einer Umesterungsumsetzung mit einem C₂₋₄-Alkylenglycol (e) unterworfen; um
(5) eine gereinigte Organophosphor-Hydroxyalkyiester-Verbindung (B) der nachstehenden allgemeinen Formel (3) oder eine Lösung von (B) in dem Alkylenglycol (e) bereitzustellen, 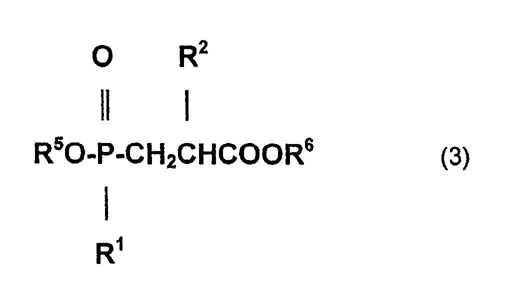 wobei
R¹ steht für eine C₁₋₁₈-Kohlenwasserstoffgruppe,
R² steht für Wasserstoff oder für eine Methylgruppe,
R⁵ steht für Wasserstoff oder für eine C₂₋₄-Hydroxyalkylgruppe,
R⁶ steht für eine C₂₋₄-Hydroxyalkylgruppe.

3. Verfahren nach Anspruch 1 oder 2,
**dadurch gekennzeichnet, dass**
in Verfahrensschritt (1) ein Reaktionsgemisch (M1), das durch eine
- in Abwesenheit eines Katalysators erfolgende - Umsetzung eines Dichlorphosphin-Derivates (a) der nachstehenden allgemeinen Formel (1),
**R**^{**1**}**PCl**_{**2**} (1)
wobei R¹ für eine C₁₋₁₈-Kohlenwasserstoffgruppe steht, mit (Meth)acrylsäure (b) in einem Molverhältnis (a) : (b) von 1 : 1,25 bis 1 : 1,45 erhältlich ist,
mit einem C₁₋₄-Monoalkohol (c) verestert wird.

4. Reaktionsfähiges Flammschutzmittel,
**gekennzeichnet durch**
eine gereinigte Organophosphor-Alkylester-Verbindung (A) die nach einem Verfahren entsprechend Anspruch 1 erhältlich ist,
wobei es sich bei (A) handelt um ein Gemisch aus
- einer Monoalkylester-Verbindung (A1) der allgemeinen Formel (2),
wobei R³ für Wasserstoff steht, und aus
- einer Dialkylester-Verbindung (A2) der allgemeinen Formel (2),
wobei R³ für eine C₁₋₄-Alkylgruppe steht; und
wobei das Molverhältnis (A1) : (A2) im Bereich von 40 : 60 bis 99 : 1 liegt.

5. Reaktionsfähiges Flammschutzmittel nach Anspruch 4,
**dadurch gekennzeichnet, dass**
R¹ für eine C₆₋₁₈-Arylgruppe steht.

6. Reaktionsfähiges Flammschutzmittel nach Anspruch 4,
für die Anwendung
als eine Comonomer-Einheit in einem ein Polyesterharz bildenden Verfahren.

7. Reaktionsfähiges Flammschutzmittel,
**gekennzeichnet durch**
eine gereinigte Organophosphor-Hydroxyalkylester-Verbindung (B) oder **durch** eine Lösung von (B) in dem Alkylenglycol (e), die nach einem Verfahren entsprechend Anspruch 2 erhältlich ist,
wobei es sich bei (B) handelt um ein Gemisch aus
- einer Monohydroxyalkylester-Verbindung (B1) der allgemeinen Formel (3),
wobei R⁵ für Wasserstoff steht, und aus
- einer Dihydroxyalkylester-Verbindung (B2) der allgemeinen Formel (3),
wobei R⁵ für eine C₂₋₄-Hydroxyalkylgruppe steht; und
wobei das Molverhältnis (B1) : (B2) im Bereich von 40 : 60 bis 99 : 1 liegt.

8. Reaktionsfähiges Flammschutzmittel nach Anspruch 7,
**dadurch gekennzeichnet, dass**
R¹ für eine C₆₋₁₈-Arylgruppe steht.

9. Reaktionsfähiges Flammschutzmittel nach Anspruch 7,
für die Anwendung
als eine Comonomer-Einheit in einem ein Polyesterharz bildenden Verfahren.

## Revendications

1. Procédé de préparation d'un composé d'ester organophosphoré
**caractérisé par** les étapes suivantes:
(1) Un mélange réactionnel (M1) qui est peut être obtenu par réaction
- réalisée en l'absence d'un catalyseur -
d'un dérivé de dichloro-phosphine (a) de la formule générale suivante (1):
**R**^{**1**}**PCl**_{**2**} (1)
dans laquelle R¹ représente un groupe hydrocarbure ayant 1 à 18 atomes de carbone,
avec de l'acide (meth)acrylique (b), la proportion molaire (a):(b) étant de 1:1,1 à 1:1,5,
est estérifié avec un monoalcool (c) ayant 1 à 4 atomes de carbone ; et
(2) ce mélange réactionnel ainsi obtenu (M2) est neutralisé avec un hydroxyde de métal alcalin ou avec un hydroxyde de métal alcalinoterreux (d) soit sous forme de solide soit sous forme de solution aqueuse, dans lequel (d) est utilisé en une quantité qui correspond à une proportion équivalente [acide chlorhydrique dans (M2) + (b) n'ayant pas réagi dans (M2)] / (d) dans une plage de 1/(0,8 à 1), et le produit de la neutralisation est ensuite purifié pour
(3) obtenir un composé d'ester d'alkyle organophosphoré (A) de la formule générale suivante (2): 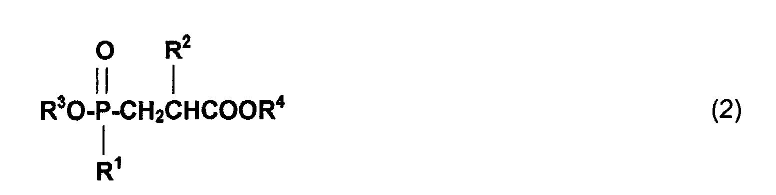 dans laquelle
R¹ représente un groupe hydrocarbure avec 1 à 18 atomes de carbone ;
R² représente l'hydrogène ou un groupe méthyle ;
R³ représente l'hydrogène ou un groupe alkyle avec 1 à 4 atomes de carbone ;
R⁴ représente un groupe alkyle ayant 1 à 4 atomes de carbone.

2. Procédé de préparation d'un composé d'ester organophosphoré
**caractérisé par** les étapes suivantes :
(1) Un mélange réactionnel (M1) qui est peut être obtenu par réaction
- réalisée en l'absence d'un catalyseur -
d'un dérivé de dichloro-phosphine (a) de la formule générale suivante (1) :
**R**^{**1**}**PCl**_{**2**} (1)
dans laquelle R¹ représente un groupe hydrocarbure avec 1 à 18 atomes de carbone,
avec de l'acide (meth)acrylique (b), la proportion molaire (a):(b) étant de 1:1,1 à 1:1,5,
est estérifié avec un monoalcool (c) ayant 1 à 4 atomes de carbone ; et
(2) ce mélange réactionnel ainsi obtenu (M2) est neutralisé avec un hydroxyde de métal alcalin ou avec un hydroxyde de métal alcalinoterreux (d) soit sous forme de solide soit sous forme de solution aqueuse, dans lequel (d) est utilisé en une quantité qui correspond à une proportion équivalente [acide chlorhydrique dans (M2) + (b) n'ayant pas réagi dans (M2)] / (d) dans une plage de 1/(0,8 à 1), et le produit de la neutralisation est ensuite purifié pour
(3) obtenir un composé d'ester d'alkyle organophosphoré (A) de la formule générale suivante (2) : 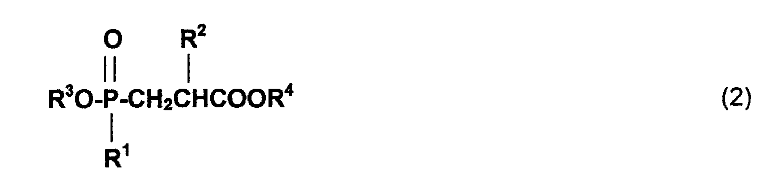 dans laquelle
R¹ représente un groupe hydrocarbure ayant 1 à 18 atomes de carbone ;
R² représente l'hydrogène ou un groupe méthyle ;
R³ représente l'hydrogène ou un groupe alkyle ayant 1 à 4 atomes de carbone ;
R⁴ représente un groupe alkyle ayant 1 à 4 atomes de carbone ;
(4) le composé d'ester d'alkyle organophosphoré (A) purifié est ensuite soumis à une réaction de transestérification avec un glycol alkylénique (e) ayant 2 à 4 atomes de carbone ; pour
(5) obtenir un composé d'ester d'hydroxyalkyle organophosphoré purifié (B) de la formule générale suivante (3) ou une solution de (B) dans le glycol alkylénique (e): 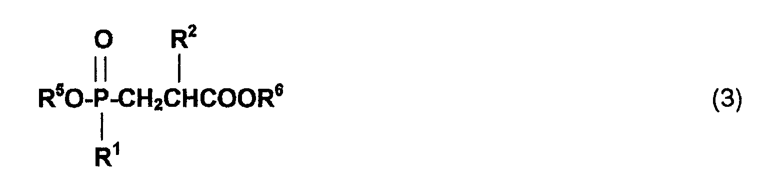 dans laquelle
R¹ représente un groupe hydrocarbure ayant 1 à 18 atomes de carbone ;
R² représente l'hydrogène ou un groupe méthyle ;
R⁵ représente l'hydrogène ou un groupe hydroxyalkyle ayant 2 à 4 atomes de carbone ;
R⁶ représente un groupe hydroxyalkyle ayant 2 à 4 atomes de carbone ;

3. Procédé conformément à la revendication 1 ou 2
**caractérisé en ce qu'** :
en une première étape (1), un mélange réactionnel (M1) qui est peut être obtenu par réaction
- réalisée en l'absence d'un catalyseur -
d'un dérivé de dichloro-phosphine (a) de la formule générale suivante (1) :
**R**^{**1**}**PCl**_{**2**} (1)
dans laquelle R¹ représente un groupe hydrocarbure ayant 1 à 18 atomes de carbone,
avec de l'acide (meth)acrylique (b), la proportion molaire (a):(b) étant de 1:1,25 à 1:1,45,
est estérifié avec un monoalcool (c) ayant 1 à 4 atomes de carbone.

4. Un produit ignifuge réactif
**caractérisé en ce qu'**il comprend:
un composé d'ester d'alkyle organophosphoré (A) purifié qui peut être obtenu selon le procédé conformément à la revendication 1,
ce composé (A) étant un mélange d'
- un composé d'ester de monoalkyle (A1) de la formule générale (2),
dans laquelle R³ représente l'hydrogène, et d'
- un composé d'ester de dialkyle (A2) de la formule générale (2),
dans laquelle R³ représente un groupe alkyle ayant 1 à 4 atomes de carbone,
la proportion molaire (A1):(A2) étant dans la plage de 40 :60 jusqu'à 99 :1.

5. Le produit ignifuge réactif conformément à la revendication 4
**caractérisé en ce que** :
R¹ représente un groupe aryle ayant 6 à 18 atomes de carbone.

6. Le produit ignifuge réactif conformément à la revendication 4
pour l'emploi
en tant qu'unité comonomère dans un procédé de formage de résine polyester.

7. Un produit ignifuge réactif
**caractérisé en ce qu'**il comprend:
un composé d'ester d'hydroxyalkyle organophosphoré (B) purifié ou une solution de (B) dans un glycol alkylénique (e) qui peut être obtenu selon le procédé conformément à la revendication 2,
ce composé (B) étant un mélange d'
- un composé d'ester de monohydroxyalkyle (B1) de la formule générale (3),
dans laquelle R⁵ représente l'hydrogène, et d'
- un composé d'ester de dihydroxyalkyle (B2) de la formule générale (3),
dans laquelle R⁵ représente un groupe hydroxyalkyle ayant 2 à 4 atomes de carbone,
la proportion molaire (B1):(B2) étant dans la plage de 40 :60 jusqu'à 99 :1.

8. Le produit ignifuge réactif conformément à la revendication 7
**caractérisé en ce que**:
R¹ représente un groupe aryle ayant 6 à 18 atomes de carbone.

9. Le produit ignifuge réactif conformément à la revendication 7
pour l'emploi
en tant qu'unité comonomère dans un procédé de formage de résine polyester.
